# EUROPÄISCHE PATENTANMELDUNG

(11) **EP 1 369 615 A2**
(43) Veröffentlichungstag der Anmeldung: **10.12.2003**
(21) Anmeldenummer: 03009274.6
(22) Anmeldetag: 24.04.2003
(51) Int. Cl.: F16F 9/05

(54) **Kombiniertes Feder-Dämpfersystem mit Luftfederung**

(30) Priorität: 05.06.2002 DE 10224868
(71) Anmelder: DaimlerChrysler AG, 70567 Stuttgart (DE)
(72) Erfinder: Gönnheimer, Peter, 71384 Weinstadt (DE); Rapp, Michael, 73079 Süssen (DE); Wilhelm, Ralf, 75394 Oberreichenbach (DE)

(57) **Zusammenfassung**

Die Erfindung betrifft ein kombiniertes Feder-Dämpfersystem mit einer Gasfeder zur Abstützung von Radaufhängungen oder Achsen an einem Fahrzeugaufbau mit einem zwischen einer radtragenden und/oder radführenden Anbindung und einer fahrzeugaufbauseitigen Anbindung angeordneten Schlauchrollbalg (11), der zwischen einer Außenglocke (30) und einem Abrollkolben (40) angeordnet ist, wobei zum einen die Außenglocke und der Abrollkolben jeweils über der Länge des entsprechenden Bauteils zumindest bereichsweise variierende Durchmesser der den Schlauchrollbalg kontaktierenden Wandungen hat und zum anderen beide Enden des Schlauchrollbalgs am Abrollkolben an Abschnitten (41,45) unterschiedlichen Durchmessers (46,47) abdichtend befestigt sind, wobei der Abrollkolben, die Außenglocke und der Schlauchrollbalg Begrenzungen eines gasbefüllten Balgraums bilden. Dazu teilt mindestens ein Trennelement (50) mit mindestens zwei einander gegenläufigen Stromventilen (71,76) den Balgraum in zwei Teilräume (6,7) auf. Das Trennelement ist mit einem der zueinander beweglichen Bauteile verbunden.

Mit der vorliegenden Erfindung wird ein kombiniertes Feder-Dämpfersystem mit einer Gasfeder entwickelt, das mit einfachen Mitteln eine reibungsarme Federung und Dämpfung realisiert.

## Beschreibung

Die Erfindung betrifft ein kombiniertes Feder-Dämpfersystem mit einer Gasfeder zur Abstützung von Radaufhängungen oder Achsen an einem Fahrzeugaufbau mit einem zwischen einer radtragenden und/oder radführenden Anbindung und einer fahrzeugaufbauseitigen Anbindung angeordneten Schlauchrollbalg, der zwischen einer Außenglocke und einem Abrollkolben angeordnet ist, wobei zum einen die Außenglocke und der Abrollkolben jeweils über der Länge des entsprechenden Bauteils zumindest bereichsweise variierende Durchmesser der den Schlauchrollbalg kontaktierenden Wandungen hat und zum anderen beide Enden des Schlauchrollbalgs am Abrollkolben an Abschnitten unterschiedlichen Durchmessers abdichtend befestigt sind, wobei der Abrollkolben, die Außenglocke und der Schlauchrollbalg Begrenzungen eines gasbefüllten Balgraums bilden.

Kombinierte Feder-Dämpfersysteme werden häufig in radführenden Federbeinen, z.B. in McPherson-Federbeinen, eingesetzt. Hierbei ist meist eine Stahlfeder, eine hydropneumatische Feder oder eine Gasfeder mit einem hydraulischen Stoßdämpfer kombiniert.

Aus der DE 27 59 435 C2 ist die Kombination einer Gasfeder mit einem hydraulischen Stoßdämpfer bekannt. Eine derartige Kombination ist aufwendig, da beide Teilsysteme separate Führungs- und Abdichtelemente aufweisen. Die in den Führungsund Abdichtelementen auftretende Reibung beeinflusst das Federungs- und Dämpfungsverhalten des Fahrzeuges.

Der vorliegenden Erfindung liegt daher die Problemstellung zugrunde, ein kombiniertes Feder-Dämpfersystem mit einer Gasfeder zu entwickeln, das mit einfachen Mitteln eine reibungsarme Federung und Dämpfung realisiert.

Diese Problemstellung wird mit den Merkmalen des Hauptanspruches gelöst. Dazu teilt mindestens ein Trennelement mit mindestens zwei einander gegenläufigen Stromventilen den Balgraum in zwei Teilräume auf. Das Trennelement ist mit einem der zueinander beweglichen Bauteile verbunden.

Der Balgraum wird durch das Trennelement in zwei Teilräume aufgeteilt. Hierbei ist das Trennelement entweder mit der Außenglocke oder dem Abrollkolben verbunden und gegenüber dem anderen Bauteil zumindest in Längsrichtung beweglich.

Beim Ein- und Ausfedern eines Rades wird ein Teilraum des Balgraums verkleinert und der jeweils andere vergrößert. Von der ausgelenkten Position schwingt das System wieder in Richtung der Ausgangslage zurück, die Teilräume nehmen zumindest annähernd ihre ursprünglichen Volumina ein. Während der Volumenänderung der Teilräume wird Gas aus dem Teilraum, dessen Volumen verkleinert wird, über das Stromventil verzögert in den jeweils anderen Teilraum verdrängt. Hierdurch wird die Dämpfung bewirkt. In dem kombinierten Feder-Dämpfersystem ist somit eine Gasfeder mit einem Gasdämpfer kombiniert.

Die Federrate wird bestimmt durch die Kraft, die erforderlich ist, um einen bestimmten Federhub zu ändern. Die Dämpferrate ergibt sich aus der erforderlichen Kraft für eine Änderung der Hubgeschwindigkeit.

Bei einer plötzlichen Belastung des Feder-Dämpfersystems, beispielsweise des kurvenäußeren Feder-Dämpfersystems beim Einfahren in eine Kurve, wird ebenfalls der eine Teilraum des Balgraums verkleinert, während der andere Teilraum vergrößert wird. Die Steifigkeit der Feder im verkleinerten Teilraum steigt sprungartig an. Einem kurvenfahrtbedingten Wanken des Fahrzeugaufbaus wird so entgegengewirkt. Mit zunehmender Gas-überströmen aus dem verkleinerten in den vergrößerten Teilraum wird die Steifigkeit der beiden Teilräume asymptotisch angeglichen. Hierdurch wird die durch die Volumenänderung gespeicherte Federenergie des Gases u.a. in Bewegungsenergie des Gases und in Wärme umgewandelt. Die gespeicherte Federenergie wird verringert. Wankschwingungen des Fahrzeugaufbaus werden hierbei gedämpft.

Bei einer geringen Ein- oder Ausfederung des Fahrzeugaufbaus wird bereits Gas zwischen den Teilräumen verdrängt. Schon bei geringen Schwingungsamplituden erfolgt eine reibungsunabhängige Dämpfung. Die Dämpfung erfolgt nicht erst nach Überwindung eines durch Reibungskräfte bestimmten Schwellenwertes.

Das Gas im Feder-Dämpfersystem kann Luft oder auch jedes andere hierfür geeignete Gas sein.

Bei der Belastung des Fahrzeuges, d.h. bei der Beladung, nimmt die durch das Feder-Dämpfersystem abgestützte Masse zu. Gleichzeitig steigt mit zunehmenden Innendruck der Gasfeder deren Federsteifigkeit. Der Quotient aus der Federsteifigkeit und der abgestützten Masse, der die Eigenfrequenz des Feder-Dämpfersystems bestimmt, bleibt hierbei zumindest annähernd konstant.

Das Feder-Dämpfersystem kann mit einer Niveauregulierung verbunden sein. Hierzu kann beispielsweise eine Druckquelle und/oder eine Drucksenke an den Balgraum angeschlossen sein. In diesem Fall bleiben bei der Belastung des Fahrzeugaufbaus die Eigenfrequenz und die Dämpferrate unverändert. Das Schwingungsverhalten des Fahrzeuges ändert sich dadurch nicht bei der Belastung des Fahrzeugaufbaus.

Das Feder-Dämpfersystem arbeitet weitgehend reibungsfrei. Die Außenglocke und der Abrollkolben werden mittels des gasgefüllten Schlauchrollbalgs geführt. Die Führungslänge entspricht hierbei etwa der Länge des Schlauchrollbalgs.

Querkräfte auf das Rad werden, zumindest beim McPherson-Federbein, zum Teil beispielsweise auf den Abrollkolben des Feder-Dämpfersystems übertragen. Hier stützen sie sich über die Führungslänge auf der Außenglocke ab. Beim Einsatz in einem radführenden Federbein ist so eine weitgehend reibungsfreie Führung zwischen den fahrwerksseitigen und den fahrzeugaufbauseitigen Teilen des Feder-Dämpfersystems möglich.

Das Feder-Dämpfersystem kann auch umgekehrt eingebaut sein. So können die vom Rad übertragenen Kräfte beispielsweise auf die Außenglocke wirken und der Abrollkolben am Fahrzeugaufbau gelagert sein.

Weitere Einzelheiten der Erfindung ergeben sich aus den Unteransprüchen und der nachfolgenden Beschreibung einer schematisch dargestellten Ausführungsform.
- Figur 1:: Kombiniertes Feder-Dämpfersystem mit einer Luftfeder und einem Differenzrollbalg;
- Figur 2:: Detail des Trennelementes;
- Figur 3:: Schnitt A-A aus Figur 2.

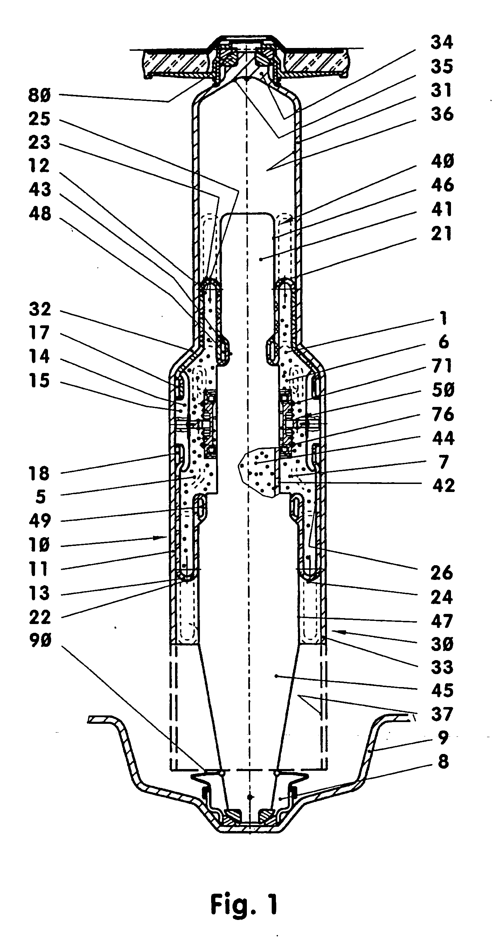

Die Figur 1 zeigt ein kombiniertes Feder-Dämpfersystem mit einem als Luftfeder wirkenden Verdränger (10).

Der Verdränger (10) besteht u.a. aus einer mehrstufigen Außenglocke (30), einem ebenfalls mehrstufigen Abrollkolben (40) und einem beide Teile verbindenden, z.B. mehrteiligen Differenzrollbalg (11). Beim Ein- und Ausfedern bewegt sich der beispielsweise am Fahrwerk befestigte Abrollkolben (40) - zentrierend geführt durch den Differenzrollbalg (11) - auf und ab. Die Außenwandung (23, 24) des Differenzrollbalgs (11) rollt hierbei an der Außenglocke (30) und am Abrollkolben (40) ab.

Die Außenglocke (30) ist ein Hohlkörper, der hier zwei zumindest bereichsweise zylindrische Abschnitte (31, 33) umfasst, die mittels eines kegelstumpfmantelförmigen Übergangsstücks (32) miteinander verbunden sind. In Figur 1 sind die Abschnitte (31, 32) und das Übergangsstück (33) z.B. aus einem Teil gefertigt. Der obere Abschnitt (31) ist an seinem oberen Ende mit einem Boden (34) verschlossen. An den Boden (34) ist ein Adapter (35) zur gelenkigen Anbindung, z.B. mittels eines Schwenklagers (80), an den Fahrzeugaufbau angeformt. Der Innendurchmesser des oberen, zylindrischen Abschnitts (31) ist beispielsweise um ein Drittel kleiner als der Innendurchmesser des unteren, zylindrischen Abschnitts (33).

Die Abschnitte (31) und (33) können auch eine kegelstumpfförmige Innenkontur haben. In einem solchen Fall würde sich der obere Abschnitt (31) nach oben hin und der untere Abschnitt (33) nach unten hin verjüngen.

Auch der Abrollkolben (40) hat einen oberen (41) und einen unteren Abschnitt (45), wobei beide Abschnitte (41, 45) beispielsweise eine zylindrische Außenkontur (46, 47) haben. Der Außendurchmesser des oberen Abschnitts (41) ist kleiner als der Außendurchmesser des Abschnitts (45). Der Außendurchmesser des Abschnitts (41) beträgt beispielsweise ca. 60% vom Innendurchmesser des Außenglockenabschnitts (31). Die Durchmesserdifferenz ist im Ausführungsbeispiel so gewählt, dass jeweils die Spalte zwischen den einander gegenüberliegenden Abschnitten (31) und (41) in den Zonen, in denen sich die Menisken (21, 22) des Differenzrollbalgs (11) bewegen, annähernd gleich breit sind.

In Figur 1 verjüngt sich der untere Abschnitt (45) des Abrollkolbens (40). Die Verjüngung beginnt unterhalb der Zone, die mit vom Differenzrollbalg (11) kontaktiert werden kann. Das untere Ende des Abrollkolbens (40) endet in einem Adapter (8) zur gelenkigen Anbindung an das Fahrwerk (9).

Zur Begrenzung des Hubes ist beispielsweise am unteren Ende des Abrollkolbens (40) ein Anschlag (90) angeordnet.

Der zwischen dem Abrollkolben (40) und der Außenglocke (30) angeordnete Differenzrollbalg (11) besteht u.a. aus zwei ggf. identischen schlauchartigen Rollbalghälften (12 ,13). Die Rollbalghälften (12, 13) sind koaxial zueinander ausgerichtet und über eine annähernd rohrförmige Verbindungsmuffe (14) gas- und flüssigkeitsdicht aneinander bzw. an der Außenglocke (30) befestigt. Die Verbindungsmuffe (14) ist ein kurzes Rohr, auf das von beiden Seiten her je eine Rollbalghälfte (12, 13) aufgeschoben ist. Der jeweils aufgeschobene Abschnitt der entsprechenden Rollbalghälften (12, 13) ist auf der Verbindungsmuffe (14) mit Hilfe je eines Spannrings (17, 18) z.B. kraft- und formschlüssig rutschfest fixiert. In der Figur 1 hat die Verbindungsmuffe (14) zwischen den Spannringen (17, 18) einen Rohrabschnitt (15), der nicht von den Rollbalghälften (12, 13) überdeckt ist. Dieser Rohrabschnitt (15) hat einen Außendurchmesser, der nur geringfügig kleiner ist als der Innendurchmesser des unteren Abschnitts (33) der Außenglocke (30).

Der von dem Differenzrollbalg (11) umschlossene Raum (5), der Balgraum (5), ist mit einem Gas (1), z.B. Luft befüllt, dessen Druck beispielsweise höher als der normale Atmosphärendruck ist.

Der Balgraum (5) wird durch ein Trennelement (50) in zwei übereinander angeordnete Teilräume (6, 7) beispielsweise etwa gleichgroßen Volumens aufgeteilt.

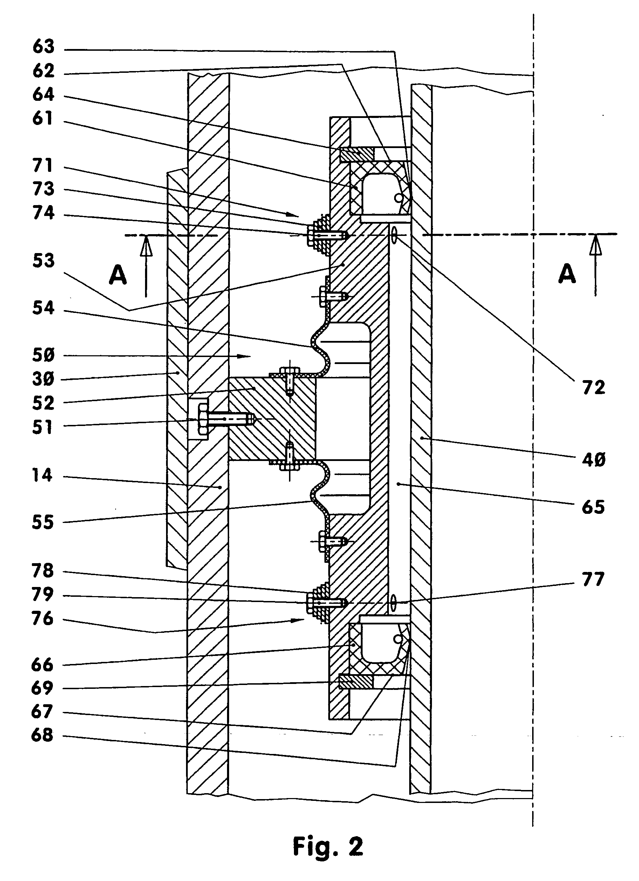

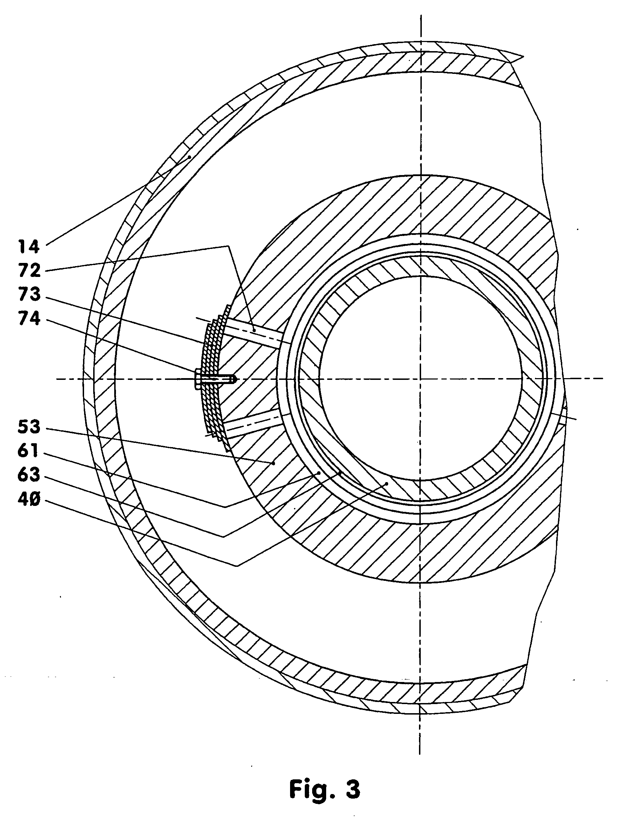

Das Trennelement (50), vgl. die Figuren 2 und 3, umfasst hierbei z.B. einen äußeren (52) und einen inneren Teil (53), die mittels zweier Faltenbälge (54, 55) zueinander beweglich miteinander verbunden sind.

Der äußere Teil (52) des Trennelementes (50) ist z.B. ein Trennring (52), der abdichtend in der Verbindungsmuffe (14) z.B. mittels Schrauben (51) befestigt ist. Die Stärke des Trennringes (52) radial zur Verbindungsmuffe (14) entspricht hier z.B. etwa der Länge des Trennringes (52) parallel zur Achse des Abrollkolbens (40).

Der innere Teil (53) des Trennelementes (50) ist z.B. eine Trennhülse (53). Diese umgreift gleitfähig den Abrollkolben (40). Ihre Länge entspricht z.B. mindestens der dreifachen Länge des Trennringes (52). Der äußere Durchmesser der Trennhülse (53) ist zumindest bereichsweise kleiner als der innere Durchmesser des Trennringes (52), so dass sie zur Montage durch den Trennring (52) hindurchgeschoben werden kann und danach oben und unten über den Trennring (52) übersteht. An diesen überstehenden Enden ist jeweils ein Faltenbalg (54, 55) befestigt, dessen anderes Ende an der Ober- bzw. Unterseite - also an den Stirnseiten - des Trennrings (52) angeordnet ist. Die Faltenbälge (54, 55) sind gasdicht.

In der Trennhülse (53) sind weiterhin zwei Dichtelemente (61, 66), beispielsweise Radialdichtringe (61, 66) angeordnet und z.B. durch Sicherungsringe (64, 69) axial gesichert. Ein oberer Radialdichtring (61) dichtet das obere Ende der Trennhülse (53) gegen den Abrollkolben (40), während der untere Radialdichtring (66) am untere Ende der Trennhülse (53) angeordnet ist. Die Radialdichtringe (61, 66) begrenzen so zusammen mit der Trennhülse (53) und dem Abrollkolben (40) einen Übertragungsraum (65). Beide Radialdichtringe (61, 66) sind hierbei so angeordnet, dass ihre Bodenseiten (62, 67) nach außen zeigen und ihre Dichtlippen (63, 68) am Abrollkolben (40) anliegen.

Oberhalb des oberen Faltenbalgs (54) und unterhalb des unteren Faltenbalgs (55) sind in der Trennhülse (53) einander gegenläufige Stromventile (71, 76) angeordnet. Diese Stromventile (71, 76) sind beispielsweise Federplattenventile (71, 76), die den Übertragungsraum (65) mit dem jeweiligen oberen (6) bzw. unteren Teilraum (7) des Balgraums (5) verbinden, vgl. Figur 3, die den Schnitt A-A aus Figur 2 zeigt.

Das einzelne Federplattenventil (71, 76) umfasst beispielsweise jeweils um 30° zueinander versetzte radiale Bohrungen (72, 77) in der Trennhülse (53), die auf der Außenseite der Trennhülse (53) durch ein mehrteiliges Blattfederpaket (73, 78) verschlossen sind. Diese Blattfederpakete (73, 78) sind jeweils beispielsweise mit einer Schraube (74, 79) an der Trennhülse (53) befestigt.
Anstatt der Federplattenventile (71, 76) können auch andere Bauformen von Stromventilen (71, 76), z.B. Drosselrückschlagventile (71, 76) eingesetzt werden. Auch kann hierbei die Drosselwirkung des einzelnen Drosselrückschlagventils (71, 76) ggf. mittels eines steuer- oder regelbaren Antriebs verstellbar ausgeführt werden.

Der Balgraum (5) - bestehend aus den Teilräumen (6) und (7) - kann ggf. einen Anschluss nach außen umfassen. Über diesen kann dann der Gasdruck im Balgraum (5) erhöht oder vermindert werden, beispielsweise zur Regulierung des Fahrzeugaufbauniveaus.

Der Abrollkolben (40) ist z.B. hohl ausgeführt. Sein Innenraum (44) kommuniziert dabei beispielsweise mit dem unteren Teilraum (7) über die Bohrung (42). Der Innenraum (44) wirkt dann als Zusatzvolumen.

Beim Einfedern eines Rades wird beispielsweise der Abrollkolben (40) gegenüber der Außenglocke (30) nach oben versetzt. Hierbei werden die beiden inneren Spannringe (48, 49) des Schlauchrollbalgs (11) mit nach oben gezogen. Der untere Schlauchrollbalg (13) rollt an der Außenglocke (30) ab und legt sich am Abrollkolben (40) an, während der obere Schlauchrollbalg (12) am Abrollkolben (40) abrollt und sich an der Außenglocke (30) anlegt. Das Volumen des unteren Teilraums (7) wird verkleinert, während das Volumen des oberen Teilraums (6) vergrößert wird. Das Volumen des Übertragungsraumes (65) bleibt unverändert.

Die jeweiligen in den Teilräumen (6, 7) eingeschlossenen Gasmassen wirken bei der Volumenänderung als Feder. Sie bauen eine Gegenkraft auf, die der Verformung der Teilräume (6, 7) entgegenwirkt.

Bei der Verkleinerung des Volumens des unteren Teilraums (7) wird der Druck des Gases (1) in diesem Teilraum (7) erhöht, während er im vergrößerten oberen Teilraum (6) absinkt. Der Druck im Übertragungsraum (65) ändert sich nicht. Dieser Druck ist nun niedriger als der Druck im unteren Teilraum (7) und höher als der Druck im oberen Teilraum (6).

Vom unteren Teilraum (7) strömt nun Gas (1) unter Verformung der Dichtlippe (68) des unteren Radialdichtrings (66) in den Übertragungsraum (65). Im unteren Teilraum (7) wird hierbei die Masse des Gases (1) und damit der Gasdruck vermindert, während der Gasdruck im Übertragungsraum (65) ansteigt. Dies bewirkt eine zusätzliche Dichtkraft auf den oberen Radialdichtring (61). Ist die Druckdifferenz zwischen dem Gasdruck im Übertragungsraum (65) und dem Gasdruck im oberen Teilraum (6) größer als die erforderliche Druckdifferenz zum Öffnen des oberen Federplattenventils (71), strömt Gas (1) aus dem Übertragungsraum (65) in den oberen Teilraum (6). Im oberen Teilraum (6) wird hierdurch die Masse des Gases (1) und der Gasdruck erhöht. Durch die Verschiebung der Gasmasse vom unteren (7) in den oberen Teilraum (6) wird das Feder-Dämpfersystem gedämpft.

Beim Ausfedern eines Rades läuft dieser Vorgang in der umgekehrten Reihenfolge ab. Der obere Teilraum (6) wird verkleinert und der untere Teilraum (7) vergrößert. Gas (1) strömt nun aus dem oberen Teilraum (6) an der Dichtlippe (63) des oberen Radialdichtrings (61) vorbei in den Übertragungsraum (65) und über das untere Federplattenventil (76) in den unteren Teilraum (7).

Die beim Fahrbetrieb auf das einzelne Rad wirkenden Querkräfte und die Radaufstandskräfte werden auf das Fahrwerk übertragen.
Ein Teil dieser Kräfte wirkt, zumindest bei der Verwendung in einem McPherson-Federbein, als Querkraft auf das Feder-Dämpfersystem.

Im Feder-Dämpfersystem wirken die Querkräfte beispielsweise auf den Abrollkolben (40), der sich über den Schlauchrollbalg (11) am gasgefüllten Balgraum (5) und an der Außenglocke (30) abstützt. Bei einem radialen Versatz des Abrollkolbens (40) gegenüber der Außenglocke (30) wird die Trennhülse (53) relativ zum Trennring (52) versetzt und teilweise auch verschwenkt. Die Faltenbälge (54, 55) werden verformt, so dass keine radialen Kräfte über das Trennelement (50) übertragen werden. Die Außenglocke (30) ist somit auf der gesamten Länge des Schlauchrollbalgs (11) reibungsarm geführt.

Beim Ein- und Ausfedern des Feder-Dämpfersystems ändert sich die Führungslänge nur unwesentlich.

Bei einem Verkippen des Abrollkolbens (40) relativ zur Außenglocke (30) wird die am Abrollkolben (40) geführte Trennhülse (53) gegenüber dem an der Außenglocke (30) befestigten Teilring (52) verkippt. Die Faltenbälge (54, 55) werden auch in diesem Falle verformt. Es werden keine Belastungen über das Trennelement (50) übertragen.

Die Außenglocke (30) kann sich gegenüber dem Abrollkolben (40) trotz des dazwischenliegenden Trennelementes (50) nicht verkanten.

Das Trennelement (50) kann auch derart aufgebaut sein, dass sein innerer Teil (53) am Abrollkolben (40) befestigt ist und sein äußerer Teil (52) an der Außenglocke (30) entlang gleitet.

Die Befestigung des Feder-Dämpfersystems am Fahrzeugaufbau kann neben einem Schwenkgelenk (80) auch ein Wälzlager - zum Schwenken des Feder-Dämpfersystems um seine Längsachse - oder ein Gelenk anderer Bauart umfassen. Auch eine Kombination verschiedener Gelenkbauarten ist denkbar.

## Patentansprüche

1. Kombiniertes Feder-Dämpfersystem zur Abstützung von Radaufhängungen oder Achsen an einem Fahrzeugaufbau mit einem zwischen einer radtragenden und/oder radführenden Anbindung und einer fahrzeugaufbauseitigen Anbindung angeordneten Schlauchrollbalg, der zwischen einer Außenglocke und einem Abrollkolben angeordnet ist, wobei zum einen die Außenglocke und der Abrollkolben jeweils über der Länge des entsprechenden Bauteils zumindest bereichsweise variierende Durchmesser der den Schlauchrollbalg kontaktierenden Wandungen hat und zum anderen beide Enden des Schlauchrollbalgs am Abrollkolben an Abschnitten unterschiedlichen Durchmessers abdichtend befestigt sind, wobei der Abrollkolben, die Außenglocke und der Schlauchrollbalg Begrenzungen eines gasbefüllten Balgraums bilden, **dadurch gekennzeichnet,**
- **dass** mindestens ein Trennelement (50) mit mindestens zwei einander gegenläufigen Stromventilen (71, 76) den Balgraum (5) in zwei Teilräume (6, 7) aufteilt und
- **dass** das Trennelement (50) mit einem der zueinander beweglichen Bauteile (30, 40) verbunden ist.

2. Feder-Dämpfersystem nach Anspruch 1, **dadurch gekennzeichnet, dass** der Schlauchrollbalg ein mindestens zweiteiliger Differenzrollbalg (11) ist.

3. Feder-Dämpfersystem nach Anspruch 1, **dadurch gekennzeichnet, dass** die Stromventile (71, 76) Federplattenventile (71, 76) sind.

4. Feder-Dämpfersystem nach Anspruch 1, **dadurch gekennzeichnet, dass** der Abrollkolben (40) ein Hohlkolben ist, der mit einem der Teilräume (6, 7) kommuniziert.

5. Feder-Dämpfersystem nach Anspruch 1, **dadurch gekennzeichnet, dass** an das Feder-Dämpfersystem eine Niveauregulierung angeschlossen ist.

6. Feder-Dämpfersystem nach Anspruch 1, **dadurch gekennzeichnet, dass** die Volumina der Teilräume (6, 7) zumindest annähernd gleich groß sind.

7. Feder-Dämpfersystem nach Anspruch 1, **dadurch gekennzeichnet, dass** die Außenglocke (30) radseitig befestigt ist.

8. Feder-Dämpfersystem nach Anspruch 1, **dadurch gekennzeichnet, dass** der Abrollkolben (40) in einem Wälzlager im Fahrzeugaufbau angeordnet ist.

9. Feder-Dämpfersystem nach Anspruch 1, **dadurch gekennzeichnet, dass** das Trennelement (50) einen äußeren (52) und einen inneren Teil (53) umfasst, die gegeneinander beweglich sind, wobei der äußere Teil (52) mit der Außenglocke (30) verbunden ist und der innere Teil (53) auf dem Abrollkolben (40) gleitet.

10. Feder-Dämpfersystem nach Anspruch 9, **dadurch gekennzeichnet, dass** der äußere (52) und der innere Teil (53) mittels mindestens eines Faltenbalgs (54, 55) verbunden sind.
